# EUROPEAN PATENT APPLICATION

(11) **EP 2 229 854 A2**
(43) Date of publication of application: **22.09.2010**
(21) Application number: 10156653.7
(22) Date of filing: 16.03.2010
(51) Int. Cl.: A47K 5/12

(54) **Wirelessly-powered dispenser system**

(30) Priority: 17.03.2009 US 160778 P; 23.02.2010 US 710587
(71) Applicant: Gojo Industries, Inc., Akron, OH 44311 (US)
(72) Inventor: Wegelin, Jackson W., Stow, OH 44224 (US)
(74) Representative: Tetzner, Michael

(57) **Abstract**

A wirelessly-powered dispenser system (10) includes a power receiver (110) that is configured to receive a wireless power signal sent from a remotely-located power transmission module (120). The received wireless power signal is used by the dispenser (100) to power a controller (200) and pump (210) to enable the automatic output of material, such as soap, provided by a replaceable refill container (220). As such, the dispenser can be installed in a wide range of locations where wired power is unavailable and without the need of battery replacement.

## Description

### CROSS-REFERENCE TO RELATED APPLICATION

This application claims the benefit of U.S. Provisional Application No. 61/160,778 filed March 17, 2009, the specification of which is incorporated herein by reference.

### TECHNICAL FIELD

The present invention generally relates to fixtures, such as dispensers for various types of materials, such as soap or the like. Particularly, the present invention relates to fixtures that are at least partially powered wirelessly. More particularly, the present invention relates to power-transmission modules that convert power from a mains power source into a wireless power signal that at least partially powers a fixture.

### BACKGROUND OF THE INVENTION

Many fixtures maintained within a building or facility, such as soap dispensers and automatic flush toilets, require a power source to power their automated functions. For example, dispensers used to dispense various material or items are generally configured as portable devices, thereby allowing them to be readily installed in a multiplicity of locations where access to the dispensed material or items is needed. In addition, many of these dispensers are configured with automated functions and, thus, require electrical power in order to operate. For example, in the case of automated, touch-free soap dispensers, soap is automatically dispensed upon the detection of a user's hand via an IR (infrared) sensor or other hand-detection system. In order to power the dispenser to achieve such automated operation, some dispensers use a wired power source, such as an electrical wall outlet. However, this restricts the installation of the dispensers to locations where access to the wall outlet can be obtained, thus preventing the dispenser from being placed in various regions where the material or items dispensed by the dispenser are needed. Furthermore, dispensers using a wired power source are often unattractive due to the unsightliness of the wires that extend from the dispenser to the power source.

To overcome these drawbacks, and to enable installation of the automated dispenser at any desired location, automated dispensers have been designed to be operable using a portable power source, such as a battery. Unfortunately, the replacement and disposal of such batteries is costly and is generally not congruent with current goals adopted by facilities to develop sustainable energy solutions to preserve the environment. Therefore, efforts have been undertaken to develop dispensers that utilize alternative power sources other than replaceable, disposable batteries.

Therefore, there is a need for a wirelessly-powered dispenser that is powered by a power signal, thereby enhancing the ability of the dispenser to be installed in various locations, while also reducing the need to replace batteries within the dispenser. In addition, there is a need for a wirelessly-powered dispenser that maintains a power receiver that receives a wireless power signal transmitted from a power transmission module. Furthermore, there is a need for a wirelessly-powered dispenser that receives a power signal transmitted from a power-transmission module that is powered by a mains power source, such as an electrical wall outlet.

### SUMMARY OF THE INVENTION

In light of the foregoing, it is a first aspect of the present invention to provide a wirelessly-powered dispenser system, which may comprise any fixture requiring power.

It is another aspect of the present invention to provide a wirelessly-powered dispenser system for dispensing material from a refill container comprising a controller coupled to a power receiver and to a pump, said pump being operatively coupled to the refill container; an actuator coupled to said controller; and a power transmission module operative to generate and transmit a wireless power signal to said power receiver; and wherein receipt of said power signal by said power receiver energizes said controller, such that said pump causes the material to be dispensed when said actuator is engaged.

A further aspect of the present invention is to provide a wirelessly-powered dispenser to dispense material from a refill container comprising a dispenser comprising a pump adapted to be fluidly coupled to the refill container, a power receiver, a controller coupled to said pump and said power receiver, and an actuator coupled to said controller; and a power transmission module that generates a wireless power signal, wherein upon receipt of said wireless power signal by said power receiver, said controller is energized, such that said pump dispenses the material from the refill container when said actuator is engaged.

Yet another aspect of the present invention to provide a wirelessly-powered dispenser to dispense material from a refill container comprising a dispenser comprising a pump adapted to be fluidly coupled to the refill container, a power receiver, a controller coupled to said pump and said power receiver, and an actuator coupled to said controller; and a power transmission module that includes a portable module power source, said power transmission module generating a wireless power signal, wherein upon receipt of said wireless power signal by said power receiver, said controller is energized, such that said pump dispenses the material from the refill container when said actuator is engaged.

### BRIEF DESCRIPTION OF THE DRAWINGS

These and other features and advantages of the present invention will become better understood with regard to the following description and accompanying drawings where:
Fig. 1 is a block diagram of a wirelessly-powered dispenser system maintaining a dispenser and a power-transmission module in accordance with the concepts of the present invention; and
Fig. 2 is a block diagram of another embodiment of the wirelessly-powered dispenser system in which the dispenser and the power-transmission module maintain a portable energy storage device in accordance with the concepts of the present invention.

### BEST MODE FOR CARRYING OUT THE INVENTION

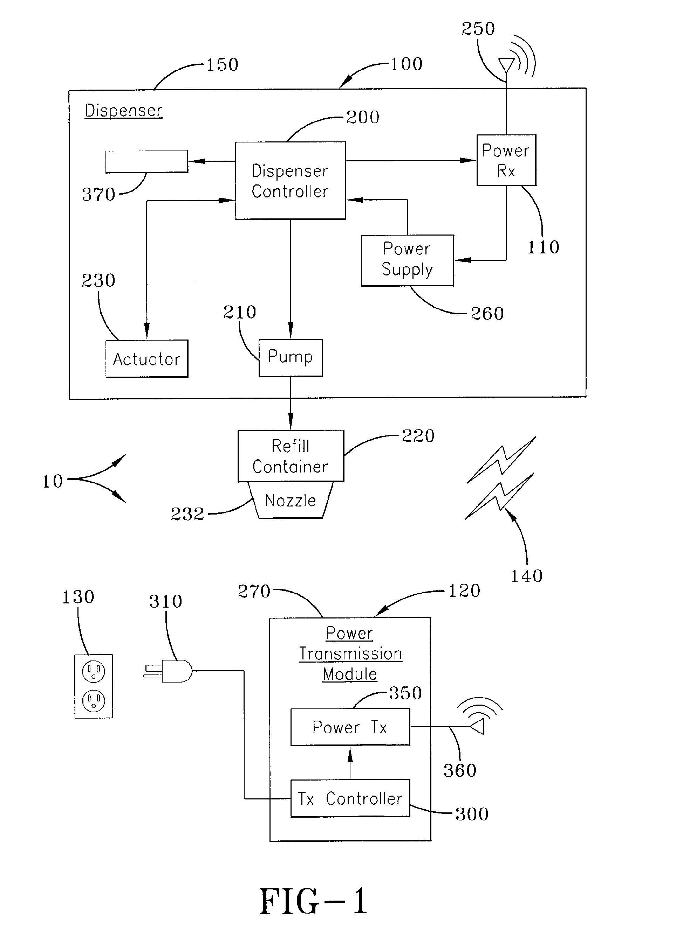

A wirelessly-powered dispenser system is generally referred to by numeral 10, as shown in Fig. 1 of the drawings. The dispenser system 10 includes a dispenser 100, such as a soap dispenser, which includes a power receiver 110 that is configured to wirelessly receive power from a separate power-transmission module 120. As such, when the power-transmission module 120 is coupled to a mains power source 130, such as a wall outlet supplying 120VAC or other value of AC (alternating current) power depending on the standard in the geographic area of use, the power-transmission module 120 converts the AC power into a radio frequency (RF) power signal 140 that is formatted to be suitable for wireless transmission to the wireless power receiver 110 maintained by the dispenser 100. The power receiver 110 then converts the transmitted power signal 140 into DC (direct current) power that is used to energize the components of the dispenser 100. Thus, because the dispenser 100 is powered by the wireless power signal 140, the dispenser 100 may be installed at any desired location within the reception range of the transmitted power signal 140 without the restrictions normally associated with that of dispensers that utilize a wired power source.

It should be appreciated that while the dispenser system 10 is discussed herein as comprising a soap dispenser, such should not be construed as limiting, as the dispensing system 10 may be configured to supply wireless power to any fixture that requires a power source to enable various automated functions, including but not limited to: dispensers of viscous materials, such as soap, sanitizer, and lotion; towel dispensers; tablet dispensers; wipe dispensers; personal hygiene object dispensers; automatic flush toilet systems; automatic faucets; automatic air deodorant spray systems, and the like.

Continuing, because the power-transmission module 120 utilizes mains power, except in cases of mains power failure to the outlet in which the module is plugged, there is no concern of the dispenser 100 becoming inoperable due to lack of power, as is the case of dispensers that use batteries.

In particular, the dispenser 100 includes a dispenser housing 150 that carries a dispenser controller 200 comprised of the necessary hardware and/or software to carry out the various functions to be discussed. Coupled to the dispenser controller 200 is a pump 210, which is configured to operatively receive a refill container 220. The refill container 220, which is configured to maintain any suitable material, such as soap, moisturizer, or antibacterial cleanser, can be readily replaced with a new refill container once the material within the refill container 220 has been depleted. An actuator 230 is also coupled to the dispenser controller 200, such that when it is operatively engaged by the user, material maintained by the refill container 220 is dispensed via a nozzle 232 maintained by the refill container 220.

In one aspect, the actuator 230 may comprise any suitable button, lever, knob, or the like, that is physically actuated by the user. Alternatively, the actuator 230 may comprise a hand-detection sensor, such as an infrared (IR) sensor, that is able to detect the presence of a user's hand when placed in proximity thereto, thus enabling touch-free operation of the dispenser 100.

The wireless power receiver 110 is coupled to the dispenser controller 200 and maintains a receiving antenna 250 that is capable of receiving the wireless power signal 140 sent from the power-transmission module 120. Once received, the wireless power signal 140 is supplied to a power supply 260 that is coupled between the power receiver 110 and the dispenser controller 200, where it is converted into DC (direct current) power. In certain embodiments, the DC power is supplied as the sole power source to the dispenser controller 200 to power the components of the dispenser 100, thus rendering the dispenser operable to dispense the material or items from the refill container 220 when the actuator 230 is engaged.

The power-transmission module 120 that generates the wireless power signal 140 includes a housing 270 that carries a transmitter controller 300, which is comprised of the necessary hardware and/or software to carry out the functions to be discussed. Coupled to the transmitter controller 300 is a power cord 310 that is configured for attachment to the mains power source 130, such as an electrical outlet, that provides AC (alternating current) power, such as 120VAC for example. In particular, the transmitter controller 300 processes the AC power received from the mains power source 130 for receipt by a power transmitter 350 that is coupled thereto. The power transmitter 350, which maintains a transmission antenna 360, converts the processed AC power from the transmitter controller 300 into a format suitable for transmission as the wireless power signal 140. In one aspect, the power transmitter 350 and the power receiver 110 may comprise any suitable wireless power transmission and reception system, such as that described in U.S. Pat. No. 4,685,047, which is incorporated herein by reference.

Continuing, the wireless power signal 140 is configured as a radio frequency (RF) signal that is compatible for receipt by the power receiver 110 maintained by the dispenser 100. Furthermore, the power signal 140 may be formatted to have signal characteristics, such as frequency and modulation format, that prevent it from interfering with the operation of other wireless devices, such as cell phones, wireless garage door operators, and the like. While the discussion of the dispenser 100 sets forth the use of a radio frequency (RF)-based power signal 140, it is also contemplated that other signal types, such as an infrared (IR) signal, evanescent wave coupling, inductive coupling (near and far field), capacitive coupling, as well as other signals from other parts of the electromagnetic spectrum, may be used to embody the power signal 140. As such, the wireless power-transmission module 120 can be remotely located from the dispenser 100 while allowing the dispenser 100 to be powered.

In addition, the dispenser 100 may also include a setup indicator 370, which may comprise an LED (light emitting diode) or LCD (liquid crystal display) that is coupled to the dispenser controller 200. Thus, the setup indicator 370 may display a signal strength bar, provide a numerical indicator, display a particular color or illuminate in a specific pattern to indicate whether the power signal 140 has sufficient strength to support the operation of the dispenser 100. As such, the setup indicator 370 is used during installation of the dispenser 100 and/or the power-transmission module 120 to ensure that they are positioned relative to each other in a manner to allow the dispenser 100 to receive a sufficient amount of energy from the power signal 140 supplied by the power-transmission module 120.

To place the wirelessly-powered dispenser system 10 into operation, the power-transmission module 120 is attached to the mains power source 130 via the power cord 310, whereupon the transmitter controller 300 receives the AC power therefrom. The transmitter controller 300 then processes the AC power and places it into a format that is compatible for receipt by the power transmitter 350. Upon the receipt of the formatted AC power, the power transmitter 350, along with the transmission antenna 360, generates the wireless power signal 140 as a radio frequency (RF) signal that is compatible for receipt by the power receiver 110 of the dispenser 100.

After receipt of the wireless power signal 140 by the power receiver 110, the power supply 260 converts the RF-based power signal 140 into a DC (direct current) signal that is distributed to the components of the dispenser 10 via the dispenser controller 200. As such, when the actuator 230 is engaged, the dispenser controller 200 energizes the pump 210, causing the material maintained by the refill container 220 to be dispensed via the nozzle 232. Thus, the dispenser 100 remains powered as long as the power receiver 110 continues to receive the transmitted power signal 140.

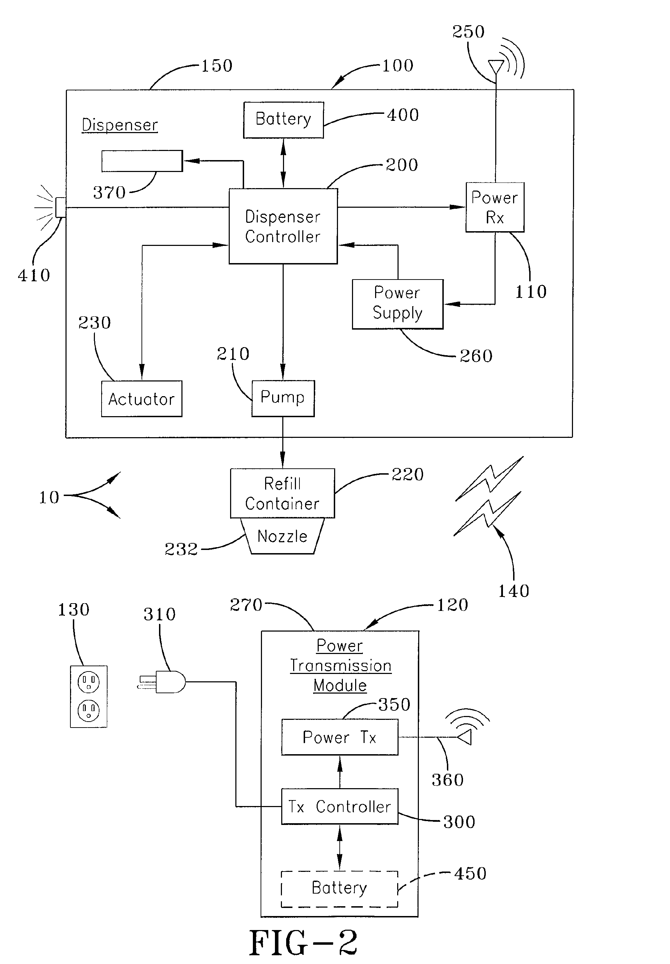

In another embodiment, as shown in Fig. 2, the dispenser 100 may be configured with a rechargeable battery 400, or other portable power source, such as a supercapacitor, which is coupled to the dispenser controller 200. As such, during the operation of the system 10, power from the wireless power signal 140 is supplied to the battery 400 to allow recharging thereof. Once recharged, the power-transmission module 120 ceases transmission of the power signal 140, whereupon the dispenser 100 is powered using the power supplied from the battery 400. In order to monitor the amount of power remaining at the battery 400, an indicator 410 is coupled to the dispenser controller 200, which is configured to generate an audible or visual prompt when the level of power at the battery 400 falls below a predetermined threshold value.

In another aspect, the power-transmission module 120 may be configured to monitor the level of charge at the battery 400 and then transmit the power signal 140 to the dispenser as needed to recharge the battery 400. As such, in the instant embodiment, the power-transmission module 120 does not have to continuously transmit the power signal 140, thus permitting the dispenser 100 to operate in circumstances when continual transmission of the power signal 140 is not practical or is not permitted. That is, the dispenser 100 and the power-transmission module 120 may be configured to communicate control commands with each other to enable various functions. For example, the dispenser 100 may be configured to transmit one or more control commands via the power signal 140 for receipt by the power-transmission module 120 in order to turn the power-transmission module 120 on or off, depending on whether the battery 400 of the dispenser 100 requires recharging. As such, the dispenser 100 may be configured to send an ON control command to the power-transmission module 120 when its battery 400 is depleted and/or send an OFF control command to the power-transmission module 120 when its battery 400 is charged. Thus, the ability of the dispenser 100 and the power-transmission module 120 to communicate allows the power-transmission module 120 to transmit the power signal 140 only when it is necessary, thus conserving energy.

In further embodiments, the power-transmission module 120 may be coupled to mains power 130 only when recharging of the battery 400 is necessary and may be removed when the battery 400 of the dispenser 100 are preferably fully but at least partially charged.

In yet another aspect, the power-transmission module 120 may be configured to operate from a rechargeable battery 450 or other portable power source, such as a supercapacitor, in lieu of using the mains power source 130. As such, the power-transmission module 120 may be readily carried to various positions in the range of reception of a plurality of dispensers 100 in various rooms, buildings, or other locations. Thus, the battery 400 maintained by multiple dispensers 100 can be wirelessly recharged, thereby allowing a single power-transmission module 120 to be used to recharge multiple dispensers 100 in multiple locations. For example, a refill technician charged with the responsibility of replacing depleted refill containers 220 with new ones may carry the battery-powered transmission module 120 with him or her. As such, the battery 400 of the dispenser 100 is recharged as the power signal 140 from power-transmission module 120 comes into the range of reception of the power receiver 110 maintained by the dispenser 100 during the replacement of the depleted refill containers 220. It should also be appreciated that to charge the battery 450 maintained by the power-transmission module 120, the power cord 310 is attached to the mains power source 130. In addition, it is also contemplated that replaceable batteries may be used in place of the rechargeable battery 450. And thus, when the power capacity of the rechargeable battery 450 becomes depleted, new batteries can be readily installed.

Although the dispenser system 10 may be configured as a standalone system whereby the dispenser 10 is not integral with any other component, other embodiments are contemplated where the dispenser 100 is made integral, or at least partially integral, with various fixtures or devices, such as those found in bathrooms, kitchens, garages, laboratories, hospitals, and the like. For example, the dispenser 100 may be integrated into bathroom and kitchen fixtures, as well as any other suitable fixture. Moreover, while the dispenser 100 has been discussed in the context of a soap dispenser, it should be appreciated that the dispenser 100 may be readily configured to dispense other items, such as towels, wipes, and the like, as well as other fixtures that require power, as previously discussed.

It is also contemplated that the power-transmission module 120 may comprise a WIFI base station or other WIFI network component that transmits or otherwise forwards wireless WIFI communication signals of a WIFI-based network. Correspondingly, the power receiver 110 of the dispenser 100 may be configured to acquire or scavenge the energy carried in the WIFI communication signals, so as to power the dispenser 100. That is, installing the dispenser 100 within the communication range of the signals generated by the WIFI-based network allows the power receiver 110 to scavenge a suitable amount of power to enable operation of the dispenser 100 in the manner previously discussed.

Therefore, one advantage of the present invention is that a wirelessly-powered dispenser system provides a dispenser that is powered by a wireless power signal transmitted by a separate, remotely-located power-transmission module. Another advantage of the present invention is that the dispenser may be located at any desired position that is in the range of reception of the power signal transmitted by the power-transmission module. Still another advantage of the present invention is that the power-transmission module converts mains power into the wireless power signal that powers the dispenser. Yet another advantage of the present invention is that the power-transmission module includes a battery, thereby enabling the power-transmission module to operate without the need for mains power.

Although the present invention has been described in considerable detail with reference to certain embodiments, other embodiments are possible. Therefore, the spirit and scope of the appended claims should not be limited to the description of the embodiments contained therein.

## Claims

1. A wirelessly-powered dispenser to dispense material from a refill container comprising:
a dispenser comprising:
a pump adapted to be fluidly coupled to the refill container;
a power receiver;
a controller coupled to said pump and said power receiver; and
an actuator coupled to said controller; and
a power transmission module that generates a wireless power signal;
wherein upon receipt of said wireless power signal by said power receiver, said controller is energized, such that said pump dispenses the material from the refill container when said actuator is engaged.

2. The dispenser of claim 1, wherein said power transmission module converts AC (alternating current) power into said wireless power signal.

3. The dispenser of claim 1, wherein said power transmission module generates said wireless power signal from a battery maintained thereby.

4. The dispenser of claim 1, wherein said power receiver converts said wireless power signal into DC (direct current) power.

5. The dispenser of claim 1, wherein said power transmission module and said power receiver are maintained in separate housings.

6. The dispenser of claim 1, further comprising a portable power source coupled to said power receiver and said controller, wherein said wireless power signal charges said portable power source.

7. The dispenser of claim 5, wherein said power transmission module stops transmission of said wireless power signal when said portable power source is charged, and resumes transmission of said wireless power signal when the charge of said portable power source falls below a predetermined value.

8. The dispenser of claim 1, wherein said actuator comprises a hand-detection sensor.

9. The dispenser of claim 1, wherein said wireless power signal comprises a signal type selected from the group consisting of an RF (radio frequency) signal, an infrared signal, an evanescent wave coupling signal, an inductive coupling signal, an inductive coupling signal, and a capacitive coupling signal.

10. The dispenser of claim 1, wherein said power transmission module formats said power transmission signal to prevent interference with at least one other transmitted signal.

11. The dispenser of claim 1, further comprising a setup indicator coupled to said controller to determine the strength of said wireless power signal.

12. The dispenser of claim 1, wherein said power transmission module comprises a wireless communication base station.

13. The dispenser of claim 1, wherein said power transmission module comprises a wireless communication network.

14. The dispenser of claim 1, wherein said power transmission module includes a portable module power source.

15. The dispenser of claim 14, wherein said power transmission module and said power receiver are maintained in separate housings.
